# EUROPÄISCHE PATENTANMELDUNG

(11) **EP 3 943 265 A1**
(43) Veröffentlichungstag der Anmeldung: **26.01.2022**
(21) Anmeldenummer: 20186973.2
(22) Anmeldetag: 21.07.2020
(51) Int. Cl.: B28D 5/04, B23D 57/00

(54) **VERFAHREN UND VORRICHTUNG ZUM GLEICHZEITIGEN ABTRENNEN EINER VIELZAHL VON SCHEIBEN VON EINEM WERKSTÜCK**

(71) Anmelder: Siltronic AG, 81677 München (DE)
(72) Erfinder: Pietsch, Georg, 84489 Burghausen (DE)
(74) Vertreter: Staudacher, Wolfgang

(57) **Zusammenfassung**

Verfahren und Drahtsäge zum gleichzeitigen Abtrennen einer Vielzahl von Scheiben von einem Werkstück während eines Trennvorgangs. Das Verfahren umfasst ist dadurch gekennzeichnet, dass eine nicht-lineare Abstands-Funktion dTAR(WP) in Abhängigkeit von einer Ziel-Dickenkennwert-Funktion TTAR(WP), einer Abstands-Funktion dINI(WP) und einer Dickenkennwert-Funktion TINI(WP) gewählt wird, wobei dTAR(WP) benachbarten Rillen im Mantel der Drahtführungsrollen an einer Position WP einen Abstand während des Trennvorgangs zuordnet, wobei TINI(WP) Scheiben, die während mehrerer vorangegangener Trennvorgänge mittels der Drahtsäge an der Position WP erhalten werden, einen an den Scheiben gemessenen Dickenkennwert zuordnet, wobei dINI(WP) benachbarten Rillen im Mantel der Drahtführungsrollen an der Position WP einen Abstand während der vorangegangenen Trennvorgänge zuordnet, wobei TTAR(WP) Scheiben, die während des Trennvorgangs an der Position WP abgetrennt werden, einen Ziel-Dickenkennwert zuordnet und wobei WP die axiale Position der benachbarten Rillen bezüglich der Achsen der Drahtführungsrollen bezeichnet.

## Beschreibung

Gegenstand der Erfindung ist ein Verfahren und eine Vorrichtung zum gleichzeitigen Abtrennen einer Vielzahl von Scheiben von einem Werkstück mittels einer Drahtsäge und eine Drahtsäge, die zur Durchführung des Verfahrens geeignet ist.

### Stand der Technik / Probleme

Für viele Anwendungen werden dünne und insbesondere gleichförmige Scheiben eines bestimmten Materials benötigt. Ein Beispiel für Scheiben, an die besonders hohe Anforderungen bezüglich Gleichförmigkeit und Planparallelität von Vorder- und Rückseite gestellt werden, sind als sog. "Wafer" bezeichnete Scheiben aus Halbleitermaterial, die als Substrate zur Fertigung mikroelektronischer Bauelemente verwendet werden. Besondere Bedeutung zur Herstellung derartiger Scheiben besitzt das sog. Drahtsägen, bei dem gleichzeitig eine Vielzahl von Scheiben von einem Werkstück abgetrennt werden, da es besonders wirtschaftlich ist.

Solche Verfahren und hierzu benötigte Vorrichtungen sind bekannt, beispielsweise aus der DE 10 2016 211 883 A1 oder der DE 10 2013 219 468 A1. Bei solchen Verfahren wird ein Draht derart spiralförmig um mindestens zwei Drahtführungsrollen geführt, dass zwei Drahtführungsrollen ein dem Werkstück zugewandtes Gatter aus parallel zueinander verlaufenden Drahtabschnitten aufspannen. Die Drahtführungsrollen weisen die Form gerader Kreiszylinder auf, um deren Achsen sie gedreht werden können und deren Mantelflächen mit einer Vielzahl kreisförmig geschlossener und in Ebenen senkrecht zu den Achsen verlaufender Rillen versehen sind, die den Draht führen. Drehen der Drahtführungsrollen erzeugt eine Relativbewegung zwischen Drahtabschnitten und Werkstück. Eine Drahtsäge weist ferner eine Zustellvorrichtung auf, an der das Werkstück über eine Sägeleiste (Opferleiste) befestigt ist und die das Werkstück auf das Drahtgatter zustellt. Relativbewegung unter Anwesenheit eines Abrasivstoffs erzeugt bei Kontakt von Werkstück und Drahtgatter einen Materialabtrag vom Werkstück. Bei fortgesetztem Zustellen unter Relativbewegung und Anwesenheit von Abrasivstoff bilden die Drahtabschnitte Material abtragend Trennspalte im Werkstück aus, und das Drahtgatter arbeitet sich langsam durch das gesamte Werkstück hindurch, bis das Drahtgatter vollständig innerhalb der Sägeleiste, mit der das Werkstück mittels einer Klebefuge verbunden ist, zu liegen kommt. Das Werkstück ist dann vollständig in Scheiben aufgetrennt, die wie Zinken eines Kamms, nur durch die Klebefuge gehalten, an der Sägeleiste hängen.

Drahtsägen kann nach Drahttrennläppen und Drahttrennschleifen unterschieden werden. Drahttrennläppen ist gekennzeichnet durch eine Dreikörper-Wechselwirkung zwischen einem Draht, der zunächst keine Abrasivstoffe trägt, dem lose in einer Aufschlämmung zugeführten Abrasivstoff und dem Werkstück. Drahttrennschleifen ist gekennzeichnet durch eine Zweikörper-Wechselwirkung zwischen Abrasivstoffen, die fest in die Oberfläche des Drahts eingebunden sind, und dem Werkstück.

Der Draht besteht meist aus perlitischem hypereutektischem Stahl (Pianodraht). Der Stahldraht ist meist mit einer sehr dünnen Schicht aus Messing oder Zink bedeckt, deren Duktilität als Ziehhilfe (Festkörperschmierung) bei der Drahtherstellung dient und beim fertigen Draht als Korrosionsschutz wirkt. Beim Drahttrennläppen besteht der Abrasivstoff meist aus Siliciumcarbid (SiC), der in einer viskosen Trägerflüssigkeit aus Öl oder Glycol aufgeschlämmt ist. Beim Drahttrennschleifen besteht der Abrasivstoff meist aus Diamant, der mittels galvanischer oder Kunstharz-Bindung oder durch Formschluss (Verpressen, Einrollen) in der Oberfläche des Drahts fixiert ist. Der Draht wird dem Drahtgatter aus einem Vorrat, meist in Form einer Spule, zugeführt. Diese Spule heißt Frischdrahtspule. Nach Durchlaufen des Drahtgatters wird der Draht einem Vorrat, ebenfalls meist in Form einer Spule, zugeführt. Diese Spule heißt Altdrahtspule.
Beim Drahtsägen kommt Glattdraht zum Einsatz, beim Drahttrennläppen zusätzlich auch sog. strukturierter Draht. Glattdraht besitzt die Form eines Kreiszylinders von sehr großer Höhe, nämlich der Länge des Drahts, und der Drahtdurchmesser entspricht dem Durchmesser des Zylinders. Strukturierter Draht umfasst einen Glattdraht, der entlang seiner gesamten Länge mit einer Vielzahl von Ausbuchtungen (protrusions) und Einstülpungen (indentations) in Richtungen senkrecht zur Drahtlängsrichtung versehen ist. Die Oberfläche eines strukturierten Drahts weist somit Vertiefungen und Erhöhungen auf, in denen sich Slurry an den Draht anlagern kann, ohne beim Eintritt des Drahts in den Trennspalt oder im weiteren Drahtverlauf durch den Trennspalt abgestreift zu werden. Strukturierter Draht weist einen Durchmesser des zugrunde liegenden Glattdrahts auf und einen Wirkdurchmesser, der dem Durchmesser des Kreiszylinders mit dem kleinsten Durchmesser entspricht, der alle Einstülpungen und Ausbuchtungen vollständig enthält (sog. Umhüllende). Ein Beispiel für einen strukturierten Draht beschreibt die WO 2006/067062 A1.

Eine Scheibe weist allgemein die Form eines Zylinders geringer Höhe auf und besitzt demnach eine untere Deckfläche (Rückseite), eine obere Deckfläche (Vorderseite) und eine Mantelfläche (Rand der Scheibe). Vorder- und Rückseite der Scheibe bilden deren Hauptflächen und der Scheibenrand deren Nebenfläche.

Die Rille der Drahtführungsrolle, die als erste mit dem dem Drahtgatter zugeführten Frischdraht in Berührung kommt, kann als erste Rille bezeichnet werden. Die Hälfte des Drahtgatters, die die erste Rille enthält, wird als Frischdraht(zufuhr)seite des Drahtgatters bezeichnet. Die Scheibe, deren eine Hauptfläche vom Drahtabschnitt der ersten Rille erzeugt wird, kann als erste Scheibe bezeichnet werden und die Hälfte des Werkstücks, der die erste Scheibe enthält, als Werkstückanfang. Die Rille, die als letztes mit dem aus dem Drahtgatter abgeführten verschlissenen Draht in Berührung kommt, kann als letzte Rille bezeichnet werden. Die Seite des Drahtgatters, das die letzte Rille enthält, wird als Altdraht(abfuhr)seite des Drahtgatters bezeichnet. Die Scheibe, deren eine Hauptfläche vom Drahtabschnitt der letzten Rille erzeugt wird, kann als letzte Scheibe bezeichnet werden und die Hälfte des Werkstücks, die die letzte Scheibe enthält, als Werkstückende.

Problematisch beim Drahtsägen ist, dass die Dicke der durch einen Trennvorgang erhaltenen Scheiben eine Verteilung endlicher Breite aufweist. Typischerweise stellt die Weiterbearbeitung der drahtgesägten Scheiben, beispielsweise durch Läppen, Schleifen, Ätzen oder Politur oder eine Abfolge dieser Schritte, hohe Anforderungen an die Dickenverteilung der drahtgesägten Scheiben. Beispielsweise darf keine Scheibe oder nur ein durch wirtschaftliche Erwägungen begrenzter maximaler Anteil der Scheiben eine Mindestdicke unterschreiten, um in jedem Fall die Mindestmaterialstärke über der Scheibenzieldicke bereitzuhalten, die der folgende Materialabtrag benötigt, um die durchs Drahtsägen geschädigten Oberflächenschichten vollständig zu entfernen. Gleichzeitig dürfen die drahtgesägten Scheiben oft eine festgelegte Maximaldicke für die Folgebearbeitung nicht überschreiten, beispielsweise weil ein überhöhter Folge-Materialabtrag unwirtschaftlich ist. Beispielsweise müssen die Scheiben in einem dem Drahtsägen nachfolgenden Läppen, das als sog. Batch-Prozess eine Vielzahl von Scheiben gleichzeitig bearbeitet, Eingangsdicken sehr enger Verteilung aufweisen, weil sonst die Auflast der Arbeitsscheibe ungleichmäßig auf die einzelnen Scheiben verteilt wird und diese brechen, oder es kommt zu einer Schieflage der Arbeitsscheibe, die zu Scheiben mit keilförmigem Dickenverlauf führt. Auch kann beispielsweise bei einer nachfolgenden Schleifbearbeitung ein Schleifrad zusetzen und stumpf werden oder bei mehreren Schleifrädern (Doppelseitenbearbeitung) ein ungleichmäßiger Materialabtrag von Vorder- und Rückseite der Scheibe resultieren, wenn die in einem Schleifvorgang abgetragene Materialmenge zu groß wird. Es sind neben der beispielhaft erwähnten Mindest- und Maximaldicke weitere Dickenparameter denkbar, bezüglich derer die drahtgesägten Scheiben eine enge Verteilung aufweisen müssen, damit dem Drahtsägen folgende Bearbeitungen wirtschaftlich betrieben werden können und Scheiben des geforderten hohen Maßes an Ebenheit und Planparallelität ihrer Vorder- und Rückseiten erhalten werden, beispielsweise die mittlere Scheibendicke.

Die Rillen einer Drahtführungsrolle weisen allgemein ein V- oder U-förmiges Querschnittsprofil auf, das eine Rillenflanke, einen Rillengrund und eine Einstichtiefe umfasst. Die Rillenflanke mündet in die rillenfreie zylindrische Mantelfläche des Zylinders, dessen Form die Drahtführungsrolle aufweist, und weist einen Öffnungswinkel auf, der den Draht "einfängt" und einem versehentlichen "Herausspringen" des Drahts bei Drehung der Drahtführungsrolle entgegenwirkt. Der Rillengrund ist der Teil des Profils, der der Drahtführungsrollenachse am nächsten ist und auf dem der Draht, der der Drahtführungsrolle mit einer festgelegten Zugkraft zugeführt wird, aufgrund der Zugkraft zu liegen kommt. Die Einstichtiefe (Rillentiefe) bezeichnet die Entfernung des der Drahtführungsrollenachse nächsten Punktes der Rille von der Mantelfläche der Drahtführungsrolle. Es sind gerade (topfförmige), spitze (V-förmige) und gekrümmte (U-förmige) Formen für den Rillengrund bekannt.

Es ist bekannt, dass das Abwälzen des losen Abrasivstoffs beim Drahttrennläppen zwischen Draht und Werkstück, das den spröd-erosiven Materialabtrag vom Werkstück bewirkt, auch zu einem unerwünschten Materialabtrag vom Draht führt: Der Durchmesser des Glattdrahts bzw. der Wirkdurchmesser des Strukturdrahts verringert sich infolge Abnutzung durch Abrieb. Demgegenüber findet beim Drahttrennschleifen keine Bewegung zwischen Abrasivstoff und Draht statt: Der Drahtdurchmesser ändert sich beim Drahttrennläppen nur geringfügig, nämlich nur infolge des sehr geringen Abriebs des Diamants oder durch gelegentlichen Ausbruch einzelner Diamanten aus dem Verbund mit der Drahtoberfläche.

Es ist weiter bekannt, dass wegen des durch Abrieb dünner werdenden Drahts insbesondere beim Drahttrennläppen ein konstanter Abstand der Rillen der Drahtführungsrollen zu einer Zunahme der Dicken der Scheiben von der Frischdrahtzur Altdrahtseite führt.

Im Stand der Technik sind Maßnahmen bekannt, um einer derart bedingten ungleichmäßigen Scheibendicke entgegenzuwirken.

Die DE 10 2010 005 718 A1 beschreibt eine Drahtführungsrolle, bei der der Krümmungsradius des U-förmigen Rillengrunds, der Öffnungswinkel der Rillenflanke oder die Rillentiefe einer jeden Rille entlang der Drahtführungsrollenachse verändert wird. Eine Änderung des Rillenabstands ist auch vorgesehen.

Eine Reihe von Schutzrechten beschreiben zylindrische Drahtführungsrollen mit von der ersten zur letzten Rille kontinuierlich abnehmendem Abstand der Rillen zueinander: CN 2015 166 49 U, KR 100 445 192 B, CN 2012 255 84 Y und CN 101 879 759 A.

Keine der im Stand der Technik bekannten Drahtführungsrollen löst jedoch das Problem breit verteilter Scheibendicken nach Drahtsägen.

Die Aufgabe der vorliegenden Erfindung besteht somit darin, ein Verfahren zur Bereitstellung von Scheiben anzugeben, die bezüglich eines für die Folgebearbeitung maßgeblichen Dickenparameters eine den Anforderungen an Ebenheit und Planparallelität der Vorder- und Rückseiten genügend enge Verteilung aufweisen.

Die Aufgabe der Erfindung wird gelöst durch ein Verfahren zum gleichzeitigen Abtrennen einer Vielzahl von Scheiben von einem Werkstück mit einer Werkstückachse mittels einer Drahtsäge während eines Trennvorgangs, umfassend das Bewegen eines Drahts der Drahtsäge relativ zum Werkstück durch Drehen von Drahtführungsrollen der Drahtsäge um ihre Achsen, wobei die Drahtführungsrollen einen Mantel aufweisen, der mit drahtführenden Rillen versehen ist, und ein Drahtgatter aus Drahtabschnitten des Drahts aufspannen;
das Zustellen des Werkstücks senkrecht zu den Drahtabschnitten auf das Drahtgatter in Anwesenheit von Abrasivstoffen, wobei sich die Drahtabschnitte vollständig durch das Werkstück arbeiten, dadurch gekennzeichnet, dass
eine nicht-lineare Abstands-Funktion dTAR(WP) in Abhängigkeit von einer Ziel-Dickenkennwert-Funktion TTAR(WP), einer Abstands-Funktion dINI(WP) und einer Dickenkennwert-Funktion TINI(WP) gewählt wird, wobei dTAR(WP) benachbarten Rillen im Mantel der Drahtführungsrollen an einer Position WP einen Abstand während des Trennvorgangs zuordnet, wobei TINI(WP) Scheiben, die während mehrerer vorangegangener Trennvorgänge mittels der Drahtsäge an der Position WP erhalten werden, einen an den Scheiben gemessenen Dickenkennwert zuordnet, wobei dINI(WP) benachbarten Rillen im Mantel der Drahtführungsrollen an der Position WP einen Abstand während der vorangegangenen Trennvorgänge zuordnet, wobei TTAR(WP) Scheiben, die während des Trennvorgangs an der Position WP abgetrennt werden, einen Ziel-Dickenkennwert zuordnet und wobei WP die axiale Position der benachbarten Rillen bezüglich der Achsen der Drahtführungsrollen bezeichnet.

Der Abstand dTAR(WP) wird vorzugsweise derart gewählt, dass die Gleichung dTAR(WP) = dINI(WP) + TTAR(WP) - TINI(WP) erfüllt ist.

Das Verfahren berücksichtigt einen Dickenkennwert von Scheiben aus einer Anzahl i von vorangegangenen Trennvorgängen mittels der Drahtsäge, wobei Drahtführungsrollen mit einer Anfangsverteilung der Rillenabstände verwendet werden, die der Abstands-Funktion dINI(WP) entspricht. Die zweite Abstands-Funktion dINI(WP) wird vorab frei festgelegt und ordnet für die vorangegangenen Trennvorgänge benachbarten Rillen im Mantel der Drahtführungsrollen einen Rillenabstand zu, der von der Position WP der benachbarten Rillen abhängt. Der Rillenabstand entspricht auch dem Abstand der beiden Drahtabschnitte im Drahtgatter, die durch die benachbarten Rillen laufen. Die Position WP ist vorzugsweise eine diskrete Längenangabe, die die axiale Position benachbarter Rillen bezüglich der Achsen der Drahtführungsrollen und damit auch eine Position von Scheiben im Drahtgatter kennzeichnet.

Die Anfangsverteilung gemäß der Abstands-Funktion dINI(WP) kann beispielsweise so gewählt werden, dass die Abstände benachbarter Rillen mit der Position WP um gleiche Beträge kontinuierlich abnehmen. Das erfindungsgemäße Verfahren umfasst des Weiteren die Vorgabe einer Ziel-Dickenkennwert-Funktion TTAR(WP), die Scheiben einen Ziel-Dickenkennwert zuordnet, die während des Trennvorgangs an der Position WP abgetrennt werden. Als Ziel-Dickenkennwert eignet sich insbesondere die Minimaldicke, die Maximaldicke und die mittlere Dicke. Der Ziel-Dickenkennwert richtet sich insbesondere nach den Anforderungen hinsichtlich des Materialabtrags eines Folgebearbeitungsschrittes. Der Ziel-Dickenkennwert kann beispielsweise eine Minimaldicke sein, die jede Scheibe aufweisen muss, damit der beispielsweise nachfolgenden Schleifbearbeitung als Folgebearbeitungsschritt ein ausreichender Materialabtrag zur Verfügung steht, um die durch das Drahtsägen geschädigten oberflächennahen Schichten vollständig zu entfernen.

Die Dickenkennwerte können auf einer vollflächigen Messung beruhen. Die Messung der Oberfläche der Scheibe entlang von deren Durchmesser, insbesondere entlang von deren Durchmesser in Zustellrichtung ist jedoch zur Bestimmung der Dickenkennwerte ausreichend und bevorzugt. Eine Messung entlang des Durchmessers in Zustellrichtung liegt auch den Dickenkennwerten der später vorgestellten Beispiele und des Vergleichsbeispiels zugrunde.

Aus der Anzahl i vorangegangener Trennvorgänge resultiert für jede Position WP eine entsprechende Anzahl i an Scheiben mit Dickenkennwerten TINI(WP). Die Dickenkennwert-Funktion TINI(WP) ordnet den Scheiben, die während der vorangegangenen Trennvorgänge mittels der Drahtsäge an der Position WP erhalten werden, einen gemeinsamen Dickenkennwert zu, der gemessen und durch Mittelwertbildung (arithmetisches Mittel) oder als Quantil berechnet wird. Die Minimaldicke einer Scheibe ist beispielsweise ein solcher Dickenkennwert und entspricht dem Wert des geringsten Abstandes korrespondierender Messpunkte der Scheiben-Vorderseite und Scheiben-Rückseite. Die Anzahl der Messpunkte auf einer Scheibenseite beträgt vorzugsweise mindestens 25. Die Messpunkte liegen bevorzugt entlang des Durchmessers in Zustellrichtung. An Stelle des Mittelwerts der Minimaldicke kann beispielsweise auch der Mittelwert der Maximaldicke oder der Mittelwert der mittleren Dicke der Scheiben an der Position WP als Dickenkennwert verwendet werden oder die Dicke eines Quantils der Minimaldicke, der Maximaldicke oder der mittleren Dicke.

Es werden alle Scheiben von derselben Position WP im Drahtgatter bezüglich des Dickenkennwerts ausgewertet. Ein Dickenkennwert kann beispielsweise das (-3 σ)-Quantil (= 0,135-Perzentil) sein. Das (-3 σ)-Quantil der Minimaldicke der Scheiben von vorangegangenen Trennvorgängen bedeutet, dass 0,135 % aller Scheiben an der Position WP diese Minimaldicke unterschreiten.

Beispielsweise kann die Ziel-Dickenkennwert-Funktion TTAR(WP) derart vorgegeben werden, dass sie jeder Position WP dieselbe Konstante zuordnet, TTAR(WP) = const., beispielsweise indem das (-3 σ)-Quantil der Minimaldicken der abzutrennenden Scheiben für alle Positionen WP denselben Wert haben soll.

Auf der Grundlage der vorgegebenen Ziel-Dickenkennwert-Funktion TTAR(WP) und der aus Messungen hervorgehenden Dickenkennwert-Funktion TINI(WP) wird die erste Abstands-Funktion dTAR(WP) bestimmt, die jeder Position WP einen Rillenabstand zwischen den beiden benachbarten Rillen mit dieser Position zuordnet.

Die erste Abstands-Funktion dTAR(WP) erhält man vorzugsweise mittels der Gleichung: dTAR(WP) = dINI(WP) + TTAR(WP) - TINI(WP).

Die Erfindung kann mit einem Glattdraht durchgeführt werden, wobei ein Glattdraht die Form eines geraden Kreiszylinders sehr großer Höhe, nämlich der Drahtlänge, aufweist. Der Durchmesser dieses Kreiszylinders bezeichnet den Durchmesser des Glattdrahts, und die Achse dieses Kreiszylinders bezeichnet die Drahtlängsachse des Glattdrahts.

Die Erfindung wird besonders bevorzugt mit einem Drahttrennläppverfahren unter Verwendung von strukturiertem Draht durchgeführt, wobei ein strukturierter Draht ein Glattdraht ist, der entlang seiner gesamten Länge mit einer Vielzahl von Einbuchtungen (indentations) und Ausstülpungen (protrusions) in Richtungen senkrecht zur Drahtachse aufweist. Bei einem strukturierten Draht ist die Drahtlängsachse die Achse des geraden Kreiszylinders geringsten Durchmessers, der den strukturierten Draht vollständig enthält (Einhüllende), und der Durchmesser dieses Kreiszylinders wird als Wirkdurchmesser des strukturierten Drahts bezeichnet.

Die Erfindung kann mit unidirektionalem Drahtlauf durchgeführt werden. Bei unidirektionalem Drahtsägen wird der Draht über die gesamte Dauer des Trennvorgangs hinweg in genau eine Richtung seiner Längsachse bewegt. Die Geschwindigkeit der Drahtzuführung kann dabei veränderlich sein.

Besonders bevorzugt wird die Erfindung im Pilgerschritt-Verfahren durchgeführt. Das Pilgerschritt-Verfahren beschreibt eine Bewegung des Drahtes in Form einer fortwährenden Abfolge von Paaren von Richtungsumkehrungen über den gesamten Trennvorgang, wobei ein Paar einer Richtungsumkehrung das Bewegen des Drahts in eine erste Richtung in Längsrichtung des Drahts um eine erste Länge und ein nachfolgendes Bewegen des Drahts in eine zweite, der ersten Richtung genau entgegengesetzte Richtung um eine zweite Länge umfasst und wobei die erste Länge größer gewählt wird als die zweite Länge. Die Paare von Richtungsumkehrungen können hinsichtlich der Längen und Geschwindigkeiten der Drahtbewegungen unterschiedlich sein.

Beispielsweise kann die erste Länge 320 m und die zweite Länge 240 m betragen. Während eines Paares von Richtungsumkehrungen werden somit 320 m + 240 m = 560 m Draht durch den Trennspalt bewegt; der Draht wird jedoch nur um insgesamt 320 m - 240 m = 80 m vom Vorrat an Frischdraht zum Vorrat an Altdraht weiterbewegt. Durch das Drahtsägen im Pilgerschritt-Verfahren wird der Draht im genannten Beispiel mit dem Faktor (320 + 240) / (320 - 240) = 560/80 = 5 genutzt. Dies ist vorteilhaft, weil bei einmaliger Drahtnutzung (unidirektionales Trennverfahren) ein sehr hoher Drahtverbrauch resultieren würde und der Altdraht nur wenig verschlissen wäre, was sehr unwirtschaftlich ist. Durch die Wahl von erster L1 und zweiter Länge L2 wird bevorzugt ein Nutzungsverhältnis r = (L1 + L2) / (L1 - L2) so gewählt, dass der Draht soweit abgenutzt wird, dass er bei der gewählten Zugspannung, mit der er dem Drahtgatter zugeführt oder aus diesem abgeführt wird, noch nicht reißt und er durch ungleichmäßige Abnutzung noch nicht so unrund geworden ist, dass der resultierende Trennspalt Weitenschwankungen aufweist, die die Ebenheit der Vorder- und Rückseite benachbarter Scheiben, die den Trennspalt begrenzen, noch nicht zu Unebenheiten und einem Mangel an Planparallelität führen, die die Scheiben für die beanspruchten Anwendungen ungeeignet machen.

Bevorzugt wird die Achse des Werkstücks parallel zu den Achsen der Drahtführungsrollen ausgerichtet. Es kann jedoch vorteilhaft sein, die Achse des Werkstücks gegenüber der Richtung der Achsen der Drahtführungsrollen zu verschwenken, beispielsweise wenn das Werkstück ein Stab (ingot) aus einkristallinem Halbleitermaterial ist und Scheiben (Wafer) mit einer bestimmten kristallographischen Fehlorientierung erwünscht sind. Eine Fehlorientierung ist beispielsweise von Vorteil, wenn der Wafer nach Drahtsägen und Folgebearbeitung (Läppen, Schleifen, Ätzen, Polieren) zusätzlich mit einer Schicht aus epitaktisch aufgebrachtem weiteren einkristallinen Halbleitermaterial versehen wird, da eine Fehlorientierung mit einer erhöhten Dichte atomarer Stufen an der Wachstumsgrenzfläche einhergeht, die ein besonders defektarmes Wachstums der Epitaxieschicht ermöglichen.

Das Verfahren kann auch ausgeführt werden mit Drahtführungsrollen, deren Rillen eine Tiefe entsprechend der Tiefen-Funktion t(WP) in Abhängigkeit von der Position WP aufweisen. Sie wird vorzugsweise proportional zur Verringerung des Drahtdurchmessers (Glattdraht) bzw. zur Verringerung des Wirkdurchmessers (strukturierter Draht) infolge Drahtverschleißes gewählt. Unter der Tiefe der Rillen wird damit die Ausdehnung der Rillen in Richtung auf die Drahtführungsrollenachse hin verstanden, also die Differenz zwischen dem Radius des geraden Kreiszylinders, dessen Form die Drahtführungsrolle aufweist und dem Abstand des Punkts des Rillenprofils von der Drahtführungsrollenachse, der den geringsten Abstand zur Drahtführungsrollenachse aufweist.

Die Aufgabe wird darüber hinaus erfüllt durch eine Drahtsäge zum gleichzeitigen Abtrennen einer Vielzahl von Scheiben von einem Werkstück, umfassend Drahtführungsrollen, die ein Drahtgatter aufspannen und Achsen und Mäntel aufweisen, wobei die Mäntel mit einer Vielzahl von Rillen versehen sind, die Draht führen, wobei der Abstand zwischen benachbarten Rillen an einer Position WP einer nicht-linearen Abstands-Funktion dTAR(WP) folgt und wobei WP die axiale Position der benachbarten Rillen bezüglich der Achsen der Drahtführungsrollen bezeichnet.

Die nicht-lineare Abstands-Funktion dTAR(WP) erfüllt vorzugsweise die Gleichung dTAR(WP) = dINI(WP) + TTAR(WP) - TINI(WP), wobei TTAR(WP) eine Ziel-Dickenkennwert-Funktion ist, die einer an der Position WP abzutrennenden Scheibe einen angestrebten Dickenkennwert zuordnet, wobei TINI(WP) eine Dickenkennwert-Funktion ist, die Scheiben, die während mehrerer vorangegangener Trennvorgänge mittels der Drahtsäge an der Position WP erhalten wurden, einen an den Scheiben gemessenen Dickenkennwert zuordnet, wobei dINI(WP) eine Abstands-Funktion ist, die benachbarten Rillen im Mantel der Drahtführungsrollen an der Position WP einen Abstand zuordnet, der während der vorangegangenen Trennvorgänge bestand.

Beispielhafte Ausgestaltungsformen der Erfindung werden nachfolgend auch mit Bezugnahme auf Zeichnungen beschrieben.

### Kurzbeschreibung der Figuren

**Fig. 1** zeigt Elemente einer Drahtsäge.
**Fig. 2** zeigt eine Drahtführungsrolle im Querschnitt.
**Fig. 3** zeigt die (-3 σ)-Quantile der Minimaldicken TMIN eines Vergleichsbeispiels und eines ersten Beispiels in Abhängigkeit von der Position WP.
**Fig. 4** zeigt die Rillenabstände WGRP in Abhängigkeit von der Position WP für das Vergleichsbeispiel, das erste und das zweite Beispiel.
**Fig. 5** zeigt die Kumulative Häufigkeit CF der Minimaldicken TMIN und Maximaldicken TMAX der Scheiben aus dem Vergleichsbeispiel, dem erstem und dem zweiten Beispiel.
**Fig. 6** zeigt die Maximaldicken TMAX der zum Vergleichsbeispiel und zum ersten Beispiel gehörigen Scheiben in Abhängigkeit von der Position WP.
**Fig. 7** zeigt die Maximaldicken TMAX der Scheiben aus Vergleichsbeispiel und zweitem Beispiel in Abhängigkeit von der Position WP.
**Fig. 8** zeigt die zu Vergleichsbeispiel und zweitem Beispiel gehörigen Minimaldicken TMIN der Scheiben in Abhängigkeit von der Position WP.
**Fig. 9** zeigt die (+3 σ)-Quantile der Maximalbreiten KMAX der Trennspalte von Trennläppvorgängen mit einem Glattdraht und einem strukturierten Draht.
**Fig. 10** zeigt charakteristische Dickenmerkmale einer trenngeläppten Halbleiterscheibe.

### Liste der verwendeten Bezugszeichen und Abkürzungen

**1** Draht
**2** Drahtabschnitt
**3** linke Drahtführungsrolle
**4** rechte Drahtführungsrolle
**5** Achse der linken Drahtführungsrolle
**6** Achse der rechten Drahtführungsrolle
**7** Drehung der linken Drahtführungsrolle
**8** Drehung der rechten Drahtführungsrolle
**9** Drahtzufuhr (Frischdraht)
**10** Drahtabfuhr (Altdraht)
**11** Drahtgatter
**12** Werkstück
**13** Bewegungsrichtung der Drahtabschnitte
**14** Achse des Werkstücks
**15** Sägeleiste
**16** Klebefuge
**17** Zustellrichtung
**18** Rille
**19** linke Düse
**20** rechte Düse
**21** Austrittsöffnung
**22** linker Strahl
**23** rechter Strahl
**24** Schnitttiefe
**25** Trennspalt
**26** Kennkerbe (Notch)
**27** Drahtführungsrolle
**28** Kern der Drahtführungsrolle
**29** Belag der Drahtführungsrolle
**30** (-3 σ)-Quantile der Minimaldicke bei linear abnehmendem Rillenabstand gegen Position WP
**31** Ausgleichskurve zu 30
**32** (-3 σ)-Quantile der Minimaldicke bei sich nicht-linear änderndem Rillenabstand gegen Position WP
**33** Ausgleichskurve zu 32
**34** linear abnehmender Rillenabstand
**35** Rillenabstand für konstantes (-3 σ)-Quantil der Minimaldicke
**36** Rillenabstand für konstantes (+3 σ)-Quantil der Maximaldicke
**37** Kumulative Häufigkeit CF der Minimaldicken bei linear abnehmendem Rillenabstand
**38** Kumulative Häufigkeit CF der Maximaldicken bei linear abnehmendem Rillenabstand
**39** Kumulative Häufigkeit CF der Minimaldicken bei sich nicht-linear änderndem Rillenabstand optimiert für konstante (-3 σ)-Quantile der Minimaldicke
**40** Kumulative Häufigkeit CF der Maximaldicken bei sich nicht-linear änderndem Rillenabstand optimiert für konstante (-3 σ)-Quantile der Minimaldicke
**41** Kumulative Häufigkeit CF der Minimaldicken bei sich nicht-linear änderndem Rillenabstand optimiert für konstante (+3 σ)-Quantile der Maximaldicke
**42** Kumulative Häufigkeit CF der Maximaldicken bei sich nicht-linear änderndem Rillenabstand optimiert für konstante (+3 σ)-Quantile der Maximaldicke
**43** (+3 σ)-Quantile der Maximaldicke TMAX gegen die Position WP bei linear abnehmenden Rillenabstand
**44** Ausgleichskurve zu 43
**45** (+3 σ)-Quantile der Maximaldicke TMAX gegen die Position WP bei nichtlinearem Rillenabstand optimiert für konstante (-3 σ)-Quantile der Minimaldicke
**46** Ausgleichskurve zu 45
**47** (+3 σ)-Quantile der Minimaldicke TMIN gegen die Position WP bei nichtlinearem Rillenabstand optimiert für konstante (+3 σ)-Quantile der Maximaldicke
**48** Ausgleichskurve zu 47
**49** (+3 σ)-Quantile der maximalen Trennspaltweite KMAX bei linear abnehmendem Rillenabstand für strukturierten Draht
**50** Ausgleichskurve zu 49
**51** (+3 σ)-Quantile der maximalen Trennspaltweite KMAX bei linear abnehmendem Rillenabstand für Glattdraht
**52** Ausgleichskurve zu 51
**53** Abschnitt mit monotoner Abnahme
**54** Abschnitt mit monotoner Zunahme
**55** Abschnitt mit monotoner Abnahme
**56** Einschnittkeil
**57** Sattel
**58** Scanrichtung in Zustellrichtung
**59** Mittelebene der Scheibe
**60** Scheibe
**61** (+3σ)-Quantile der Maximaldicke TMAX gegen die Position WP bei nichtlinearem Rillenabstand, optimiert für konstante (+3σ)-Quantile der Maximaldicken
**62** Ausgleichskurve zu 61
**α** Öffnungswinkel
**CF** kumulative Häufigkeit (cumulative frequency)
**d** Rillenabstand (pitch)
**d1** Abstand der zweiten zur ersten Rille
**dINI(WP)** Abstands-Funktion
**dTAR(WP)** nicht-lineare Abstands-Funktion
**D** Durchmesser der Drahtführungsrolle
**DIFF** Differenz
**i** Schnittzähler
**KMAX** maximale Breite der Trennspalte
**L** Länge der Drahtführungsrolle
**r** Krümmungsradius des Rillengrunds
**s** Breite des zylindrischen Teils zwischen benachbarten Rillen
**s1** Breite des zylindrischen Teils zwischen erster und zweiter Rille
**s(WP)** Breiten-Funktion
**t** Tiefe der Rille
**t(WP)** Tiefen-Funktion
**t1** Tiefe der ersten Rille
**TMIN** Minimaldicke einer Scheibe
**TMAX** Maximaldicke einer Scheibe
**TINI(WP)** Dickenkennwert-Funktion
**TTAR(WP)** Ziel-Dickenkennwert-Funktion
**VAR** Varianz
**WGRP** Rillenabstände der Drahtführungsrollen (Wire-Guide Roller Pitch)
**WP** Position des Rillenabstands zweier benachbarter Rillen auf der Drahtführungsrolle beziehungsweise Scheiben-Position

### Detaillierte Beschreibung erfindunqsqemäßer Ausführunqsbeispiele

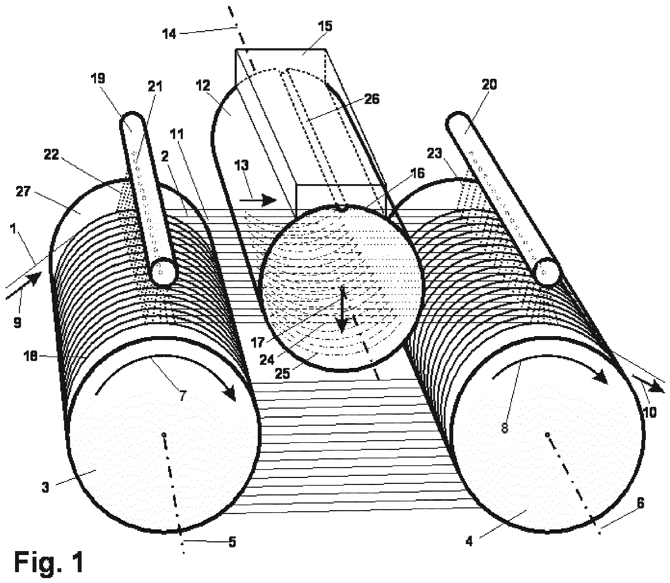

Fig. 1 zeigt die Elemente einer Drahtsäge, die zum Verständnis der Erfindung beitragen: Draht 1 wird aus einem Vorrat (Frischdrahtspule, nicht gezeigt) in Richtung 9 zugeführt und spiralförmig in Rillen 18 so um mindestens zwei Drahtführungsrollen 27 herumgeführt, wobei ein Drahtgatter 11 aus parallel zueinander verlaufenden Drahtabschnitten 2 entsteht. Das Beispiel einer Drahtsäge in Fig. 1 zeigt zwei Drahtführungsrollen 27, nämlich eine linke Drahtführungsrolle 3 und eine rechte Drahtführungsrolle 4. Durch Drehen der Drahtführungsrollen 3 und 4 um ihre Achsen 5 und 6 in Drehrichtungen 7 und 8 werden Drahtabschnitte 2 und Drahtgatter 11 relativ in Richtung 13 zum Werkstück 12 bewegt. Die Achsen 5 und 6 der Drahtführungsrollen 3 und 4 sind parallel zueinander ausgerichtet. Das Werkstück 12 besitzt eine Achse 14 und ist mit einer Sägeleiste 15 über eine Klebefuge 16 verbunden. Die Sägeleiste ist an einer Zustellvorrichtung (nicht gezeigt) befestigt, die das Werkstück 12 in Richtung 17 senkrecht auf das Drahtgatter 11 zustellt. Bevorzugt ist das Werkstück 12 ein Stab aus einkristallinem Halbleitermaterial, beispielsweise aus einkristallinem Silicium. In diesem Fall weist das Werkstück eine gerade kreiszylindrische Form auf und ist parallel zu seiner Achse 14 mit einer Kennkerbe 26 für die Kristallorientierung versehen. Beidseitig des Werkstücks 12 wird das Drahtgatter 11 von Düsen 19 und 20 über Öffnungen 21 in den Düsen mit Strahlen 22 und 23 an flüssigem Schneidhilfsmittel versorgt. Wenn die Drahtsäge im Trennschleifverfahren betrieben wird, ist das Schneidhilfsmittel ein Kühlschmiermittel, das keine abrasiv wirkenden Stoffe enthält und der Draht 1 ist ein Pianodraht, dessen Oberfläche fest eingebundene Körner aus Diamant enthält, die abrasiv wirken. Wenn die Drahtsäge im Trennläppverfahren betrieben wird, ist das Schneidhilfsmittel eine Aufschlämmung von Siliciumcarbid (SiC) in einem flüssigen Träger aus Öl oder Glycol.

Durch Zustellen in Richtung 17 gerät das Drahtgatter 11 in Kontakt mit dem Werkstück 12. Durch die Relativbewegung 13 zischen Drahtgatter 11 und Werkstück 12 bewirken die Drahtabschnitte 2 bei Anwesenheit der abrasiv wirkenden Stoffe einen Materialabtrag vom Werkstück 12. Bei weiterem Zustellen 9 unter Relativbewegung 13 bildet der Materialabtrag, den die Drahtabschnitte 2 bewirken, Trennspalte 25 im Werkstück 12 aus. Die Tiefe im Werkstück 12, bis zu dem sich die Drahtabschnitte durch das Werkstück hindurchgearbeitet haben, wird als Schnitttiefe 24 bezeichnet. Wenn die Schnitttiefe 24 den Durchmesser des Werkstücks überschreitet, haben alle Drahtabschnitte 2 des Drahtgatters 11 das Werkstück durchtrennt und sind in der Halteleiste 15 angekommen: Das Werkstück ist vollständig in eine Vielzahl von Scheiben zertrennt. Nach Durchlaufen des Drahtgatters verlässt der Draht 1 das Drahtgatter 11 in Richtung 10 zu einem Vorrat an gebrauchtem Draht (Altdrahtspule, nicht gezeigt).

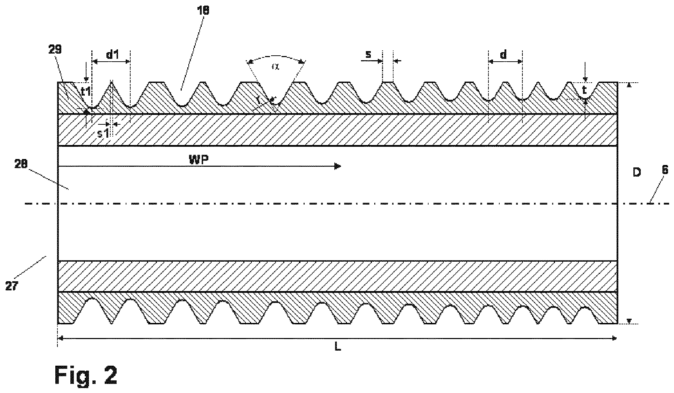

Fig. 2 zeigt eine Drahtführungsrolle 27 mit Durchmesser D und Länge L in einer Schnittebene, die die Achse 6 enthält, umfassend einen Kern 28, der beispielsweise eine Kammer zur Kühlung der Drahtführungsrolle enthalten kann, und einen Mantel 29. Der Mantel 29 besteht aus einer Beschichtung aus einem verschleißresistenten Material, beispielsweise aus duroplastischem Polyurethan. Die Beschichtung ist mit in Ebenen senkrecht zur Achse 6 angeordnete, um die Drahtführungsrolle umlaufenden, kreisförmig geschlossenen Rillen 18 versehen. Erfindungsgemäß ist der Abstand benachbarter Rillen in Abhängigkeit von deren Position WP, gemessen entlang der Achse 6 von der ersten Rille mit der Tiefe t1 bis zur letzten Rille so gewählt, dass er der nicht-linearen Abstands-Funktion dTAR(WP) folgt. Die nicht-lineare Abstands-Funktion dTAR(WP) hängt von Dickenkennwerten von Scheiben vorangegangener Trennvorgänge, von der Abstands-Funktion der Rillenabstände während der vorangegangenen Trennvorgänge und von der vorgegebenen Ziel-Dickenkennwert-Funktion TTAR(WP) ab. Wie die unterschiedlichen Abstände beispielsweise des ersten Rillenabstands d1 und eines beliebigen Rillenabstands d zeigen, ändert sich dTAR(WP) nicht-linear. Die Rillen weisen einen Öffnungswinkel α ihrer Rillenflanken und einen Krümmungsradius r ihrer Rillengründe auf. Ferner kann die Rillentiefe t gemäß einer Ausführungsform der Erfindung mit der Position WP entsprechend der Tiefen-Funktion t(WP) variieren, wie die beispielhaft gezeigte Tiefe t1 der ersten Rille und einer beliebigen Rille t, zeigen. Abhängig von dem mit der Position WP veränderlichen Rillenabstand dTAR(WP) und gegebenenfalls der veränderlichen Rillentiefe t(WP) weisen bei gleichem Krümmungsradius r der Rillengründe und Öffnungswinkel α der Rillenflanken die verbliebenen zylindrischen Bereiche der Mantelfläche zwischen den Rillen unterschiedliche Breiten entsprechend der Breiten-Funktion s(WP) auf. Die Breite s1 zeigt exemplarisch den zylindrischen Anteil zwischen erster und zweiter Rille.

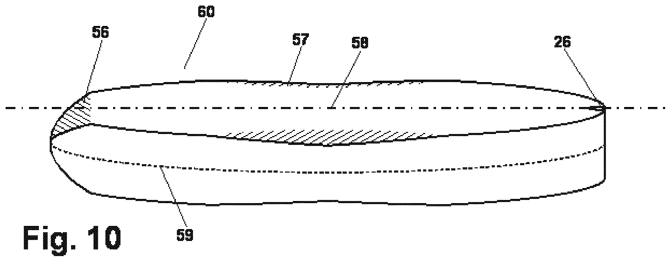

Fig. 10 zeigt eine Prinzipskizze einer durch Drahttrennläppen erhaltenen Halbleiterscheibe 60 in Dickendarstellung, d.h. mit ebener Mittelfläche 59 zwischen Vorder- und Rückseite der Halbleiterscheibe, in perspektivischer Darstellung. Etwaige Welligkeiten der Scheibe, die sich in einer Krümmung der Mittelfläche 59 zeigen würden, sind in dieser Dickendarstellung unterdrückt. Die Mittelfläche enthält genau die Punkte auf der Hälfte der Strecken, die jeweils korrespondierende Punkte auf der Vorderseite und der Rückseite verbinden. Korrespondierende Punkte sind jeweils diejenigen, deren sie verbindende Strecken senkrecht auf der Mittelfläche stehen.

Eine mittels Drahttrennläppen erhaltene Halbleiterscheibe 60 weist in Dickendarstellung typischerweise einen Einschnittkeil 56 auf, eine Zone verringerter Scheibendicke im Bereich des ersten Kontakts des Werkstücks mit dem Drahtgatter. Der Schnitt, also die Zustellung des Werkstücks während des Trennvorgangs, verläuft entlang der Scanlinie 58 von links nach rechts in Fig. 10. Der Draht bewegt sich senkrecht zur Zustellrichtung, also senkrecht zur Scanlinie 58. Der Dickenkennwert wird vorzugsweise parallel zur Scanlinie 58 gemessen.

Der Einschnittkeil 56 entsteht, weil zu Beginn des Trennvorgangs Frischdraht im Drahtgatter vorhanden ist, der einen breiten Trennspalt und somit einer reduzierte Scheibendicke verursacht. Der zu Beginn des Trennvorgangs im Drahtgatter vorhandene Drahtvorrat ist derjenige, der im vorangegangenen Trennvorgang als letztes durch die Sägeleiste geschnitten hat. Die Sägeleiste ist aus einem Material, das in der Regel weicher und leichter zu zerspanen ist als das Halbleitermaterial. Die Sägeleiste besteht beispielsweise aus gesintertem Kohlenstoff, einem Verbundkunststoff oder aus Glas. Das Schneiden durch die Sägeleiste führt daher nur zu einem geringen Verschleiß des zu Beginn des Trennvorgangs im Drahtgatter vorhandenen Drahts. Sobald eine Schnitttiefe ins Werkstück von einigen Zentimetern erreicht ist, hat sich der Drahtvorrat im Drahtgatter im Zuge weiteren Zuführens von Draht und einsetzenden Verschleißes des Drahts durch den Kontakt mit dem Werkstück ausgetauscht gegen Drahtabschnitte, deren Durchmesser bestimmt ist durch das Verhältnis von Zeitspanvolumen zu Drahtzufuhrgeschwindigkeit, so dass nun ein dünnerer Trennspalt erzeugt wird und eine größere Scheibendicke resultiert.

Im Bereich der größten Länge des Eingriffs des Drahts in das Werkstück, also in der Mitte der Scanlinie 58, weist die Dicke der drahttrenngeläppten Halbleiterscheibe 60 eine Sattelform 57 auf. Diese rührt daher, dass die Drahtabschnitte beim Eintritt in das Werkstück und beim weiteren Vordringen in Richtung des Werkstückzentrums einen großen Teil des sie umgebenden Schneidhilfsmittels (Slurries), das die Breite des erzeugten Trennspalts mitbestimmt, durch Abstreifen am Werkstückrand, Verbrauch und Abtropfen verlieren. Fig. 10 zeigt zwei derartige Zonen 57 reduzierter Dicke an einander in Drahtlaufrichtung gegenüberliegenden Rändern der Halbleiterscheibe. Die Drahtabschnitte sind folglich beim Sägen im Pilgerschrittverfahren in beiden Richtungen in das Werkstück eingetreten.

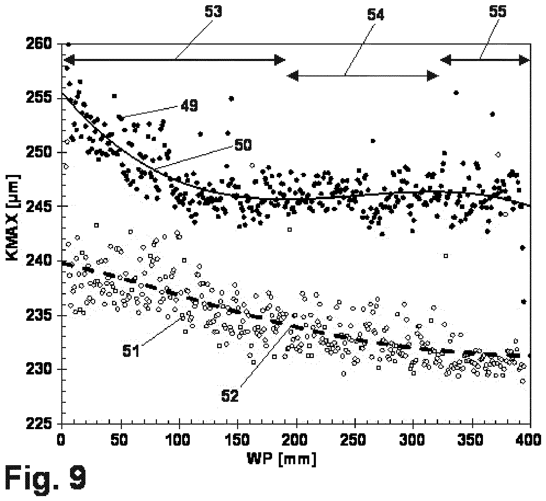

Dieses Verhalten und die gezeigte resultierende Scheibenform erklären den beobachteten Verlauf der maximalen Breite des Trennspalts in Abhängigkeit der Position WP, den Fig. 9 zeigt. Die Punkteschar 51 und die dazugehörende Ausgleichskurve 52 zeigen den Verlauf der (+3 σ)-Quantile der maximalen Breite der Trennspalte aus ca. 2000 Trennvorgängen, bei denen Siliciumscheiben (Wafer) mit einem Durchmesser von 300 mm mit einem Glattdraht abgetrennt wurden. Zum Vergleich zeigt die Punkteschar 49 und die dazugehörende Ausgleichskurve den Verlauf der (+3 σ)-Quantile der maximalen Breite des Trennspalts in Abhängigkeit der Position WP, wobei ca. 1000 Trennvorgänge mit strukturiertem Draht durchgeführt wurden, um Halbleiterscheiben mit einem Durchmesser von 300 mm zu erhalten.

Der Verlauf der Ausgleichskurve 52 zeigt, dass bei Verwendung von Glattdraht die maximale Breite des Trennspalts nicht-linear von der Position WP abhängt und folglich nicht durch eine lineare Degression der Rillenabstände so ausgeglichen werden kann, damit Scheiben mit beispielsweise möglichst gleicher Dicke aus jeder Position WP erhalten werden können. Die Punkteschar 49 und der Verlauf der dazugehörenden Ausgleichkurve 50 zeigen, dass bei Verwendung von strukturiertem Draht die maximale Breite des Trennspalts in Abhängigkeit der Position WP stellenweise sogar zunehmen kann. Die Ausgleichskurve 50 weist beispielsweise einen Abschnitt 53 mit nicht-linear abfallenden maximalen Trennspaltbreiten auf, des Weiteren einen Abschnitt 54, in dem die maximalen Trennspaltbreiten mit der Position WP zunehmen und zwar trotz des mit der kumulativen Eingriffslänge in das Werkstück abnehmenden Wirkdurchmessers des strukturierten Drahts, sowie einem Abschnitt 55 mit nicht-linear abfallender maximaler Trennspaltbreite.

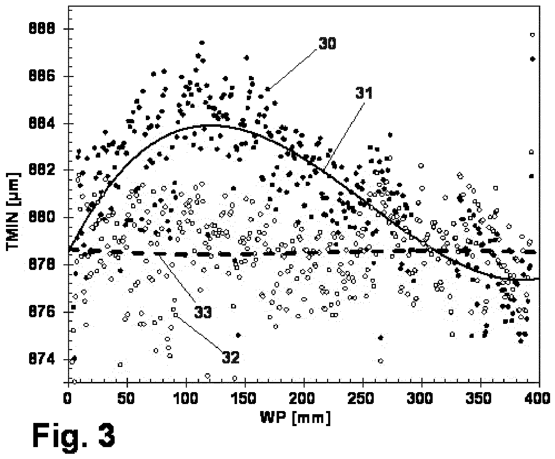

Fig. 3 zeigt als Vergleichsbeispiel die Punkteschar 30 des (-3 σ)-Quantils der Minimaldicken TMIN der aus etwa 1000 Trennvorgängen mittels Trennläppen mit strukturiertem Draht von 175 µm Kerndraht-Durchmesser erhaltenen Halbleiterscheiben, aufgetragen gegen die Position WP im Drahtgatter. Es wurden Drahtführungsrollen verwendet mit von der ersten zur letzten Rille linear abnehmenden Abständen benachbarter Rillen und gerade kreiszylindrische Silicium(100)- Einkristalle geschnitten, wobei bis zu drei Stäbe mit bis zu 400 mm Gesamtlänge (variabel) hintereinander in einem Trennvorgang auf der Sägeleiste montiert waren. Nur jede 25. Halbleiterscheibe wurde gemessen, so dass trotz der hohen Anzahl an Trennvorgängen und wegen des aus statistischen Gründen generell verrauschten (-3 σ)-Quantils die Punkteschar 30 mit dem Regressionspolynom dritter Ordnung 31 stark streut. Je Trennvorgang wurden 60 km strukturierter Draht eingesetzt, was eine Differenz des Wirkdurchmessers des frischen, dem Drahtgatter zugeführten Drahts und des Wirkdurchmessers des verbrauchten, aus dem Drahtgatter fortgeführten Drahts von 12 µm ergab. Der Rillenabstand zwischen erster und zweiter Rille betrug 1134 µm und der zwischen vorletzter und letzter Rille 1122 µm, der Gesamtbetrag der linearen Degression folglich 1134 µm - 1122 = 12 µm, so dass sich für die Minimaldicke der ersten und der letzten Halbleiterscheibe möglichst identische Dicken TMIN ergeben haben sollten. Es zeigte sich jedoch, dass die Halbleiterscheiben aus Zwischenpositionen trotz der linearen Degression des Rillenabstands um bis zu 5,7 µm in Bezug auf die Ausgleichskurve 31 bzw. bis zu 12,3 µm in Bezug auf die Quantile gemäß Punkteschar 30 voneinander abwichen. Demzufolge war trotz der linearen Degression der Rillenabstände wertvolles Halbleitermaterial durch Erzeugen unnötig dicker Halbleiterscheiben verschwendet worden.

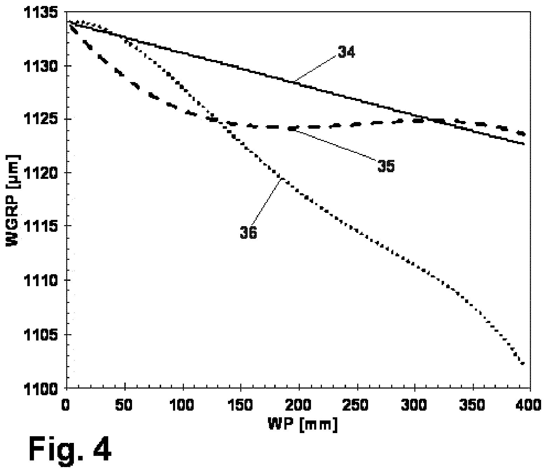

Fig. 4 zeigt die Anfangsverteilung der Rillenabstände 34 als Abstands-Funktion für das Vergleichsbeispiel, das erste und das zweite Beispiel. Es wurde jeweils eine lineare Degression des Rillenabstands gewählt. Für das erste und das zweite Beispiel entspricht dieser Verlauf der Rillenabstände 34 der Funktion dINI(WP), wobei die Trennvorgänge des Vergleichsbeispiels die vorangegangenen Trennvorgänge bildeten. Fig. 4 zeigt des Weiteren den Verlauf der Rillenabstände 35, der der nicht-linearen Abstands-Funktion dTAR(WP) entspricht, die mittels der Gleichung dTAR(WP) = dINI(WP) + TTAR(WP) - TINI(WP) für das erste Beispiel berechnet wurde. Die Funktion TINI(WP) repräsentiert die Dicke der (-3 σ)-Quantile der Minimaldicken der Scheiben der vorangegangenen Trennvorgänge, die Ziel-Dickenkennwert-Funktion konstante (-3 σ)-Quantile der Minimaldicken: TTAR(WP) = 878,6 µm. Der Verlauf der Rillenabstände 35 nimmt nicht nur monoton ab, sondern weist vorübergehend auch einen ansteigenden Bereich auf. Die Bereiche dieses Verlaufs haben eine ähnliche Struktur wie die Bereiche 53, 54 und 55 der Ausgleichskurve 50 der (+3 σ)-Quantile der maximalen Trennspaltbreite gemäß Fig. 9.

Fig. 3 zeigt als Ergebnis des ersten Beispiels die Punkteschar 32 des (-3 σ)-Quantils der Minimaldicken TMIN aus etwa 1000 Trennvorgängen mittels Trennläppen, wobei der Dickenkennwert nur an jeder 25. Halbleiterscheibe gemessen wurde. Mit Ausnahme der Rillenabstände waren die Bedingungen beim Trennläppen dieselben wie im Vergleichsbeispiel. Die Rillenabstände 35 folgten der mittels der Gleichung berechneten nicht-linearen Abstands-Funktion dTAR(WP). Das Ausgleichspolynom 33 zur Punkteschar 32 ist für alle Positionen WP im Drahtgatter nahezu konstant. Das erfindungsgemäß durchgeführte Verfahren lieferte also Halbleiterscheiben mit (-3 σ)-Quantilen der Minimaldicken, die eng verteilt um ihrem Zielwert von 878,6 µm liegen.

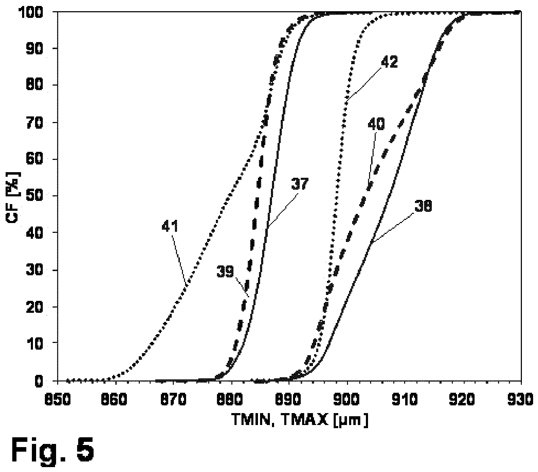

Fig. 5 zeigt die kumulative Häufigkeit der Minimaldicken TMIN und Maximaldicken TMAX aller gemessenen Scheiben, nämlich die kumulative Häufigkeit 37 der Minimaldicken der Scheiben des Vergleichsbeispiels und die kumulative Häufigkeit 39 der Minimaldicken der Scheiben des ersten Beispiels. Ebenfalls aufgetragen sind die kumulative Häufigkeit 38 der Maximaldicken der Scheiben des Vergleichsbeispiels und die kumulative Häufigkeit 40 der Maximaldicken der Scheiben des ersten Beispiels sowie die kumulative Häufigkeit 41 der Minimaldicken TMIN und die kumulative Häufigkeit 42 der Maximaldicken der Scheiben des zweiten Beispiels.

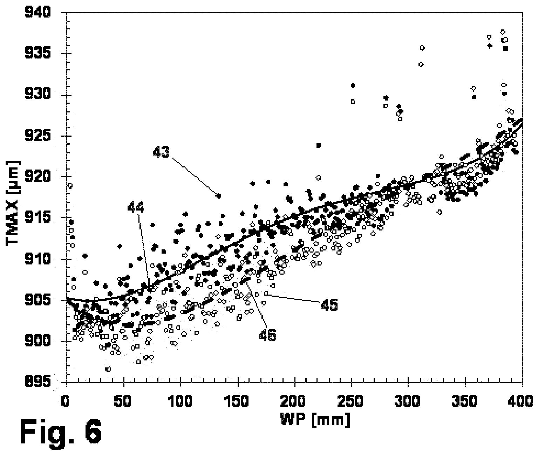

Fig. 6 zeigt die Punkteschar 43 des (+3 σ)-Quantils der Maximaldicken TMAX der Scheiben des Vergleichsbeispiels und die dazugehörende Ausgleichskurve 44 sowie die Punkteschar 45 des (+3 σ)-Quantils der Maximaldicken TMAX der Scheiben des ersten Beispiels und die dazugehörende Ausgleichskurve 46.

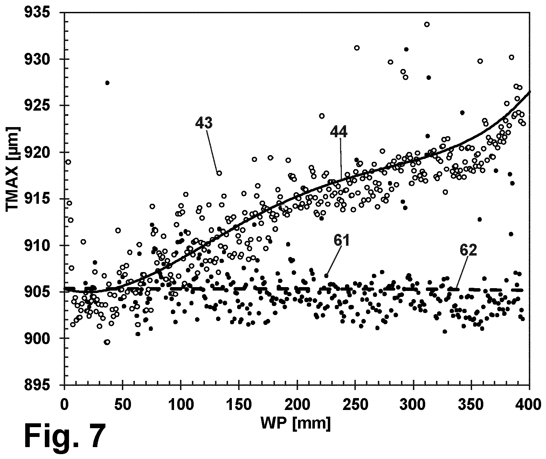

Die Ergebnisse des zweiten Beispiels zeigen, dass die Rillenabstände beispielsweise auch auf eine möglichst gleichmäßige Maximaldicke der Scheiben hin optimiert werden können: Fig. 7 zeigt die Punkteschar 61 des (+3 σ)-Quantils der Maximaldicken und die dazugehörende Ausgleichskurve 62 von Scheiben, bei denen während des Trennvorgangs die Rillenabstände wie die in Fig. 4 gezeigten Rillenabstände 36 mit der Position WP im Drahtgatter variierten. Der Verlauf entspricht dem der nicht-linearen Abstands-Funktion dTAR(WP), wobei beim Lösen der Gleichung für die Dickenkennwert-Funktion TINI(WP) das (+3 σ)-Quantil der Maximaldicken als Dickenkennwert und für die Ziel-Dickenkennwert-Funktion konstante (+3 σ)-Quantile der Maximaldicken angesetzt wurden. Zum Vergleich sind in Fig. 7 noch einmal die Punkteschar 43 des (+3 σ)-Quantils der Maximaldicken der Scheiben des Vergleichsbeispiels und die dazugehörende Ausgleichskurve 44 gezeigt.

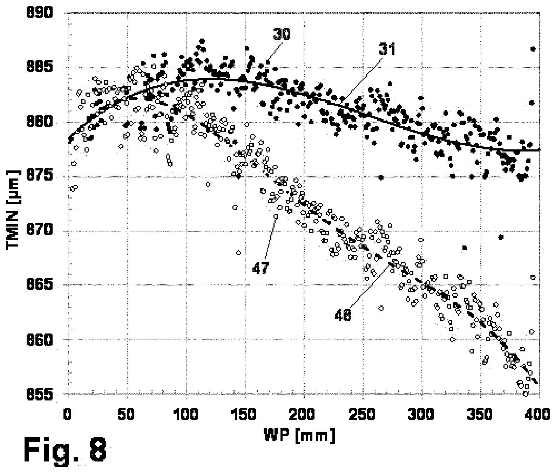

Fig. 8 zeigt die Punkteschar 47 des (-3 σ)-Quantils 47 der Minimaldicken der Scheiben des zweiten Beispiels und die dazugehörende Ausgleichskurve 48 und noch einmal zum Vergleich die Punkteschar 30 des (-3 σ)-Quantils der Minimaldicken der Scheiben des Vergleichsbeispiels und die dazugehörende Ausgleichskurve 31.

**Tabelle 1 fasst die Ergebnisse zusammen:**

| | erstes Beispiel | | | | zweites Beispiel | | | |
|---|---|---|---|---|---|---|---|---|
| | TMIN | | TMAX | | TMIN | | TMAX | |
| | dINI(WP) | dTAR(WP) | dINI(WP) | dTAR(WP) | dINI(WP) | dTAR(WP) | dINI(WP) | dTAR(WP) |
| VAR | 5,2 | 0,0 | 38,3 | 58,6 | 5,2 | 63,5 | 38,3 | 0,0 |
| DIFF | 5.2 | | -20.4 | | -58,4 | | 38.3 | |

Angegeben ist in Tabelle 1 die Varianz VAR der den Ausgleichskurven zugrunde liegenden Ausgleichspolynome und die Differenz DIFF über die Position WP im Drahtgatter, um die sich die Dickenverteilungen der beiden Beispiele gegenüber dem Vergleichsbeispiel verändert haben. Im ersten Beispiel (die Ziel-Dickenkennwert-Funktion gibt ein konstantes (-3 σ)-Quantil der Minimaldicken TMIN der Scheiben vor) hat sich die Varianz im Vergleichsbeispiel (lineare Degression der Rillenabstände) von 5,2 µm auf 0 µm verringert. Die Varianz der (+3 σ)-Quantile der zugehörigen Maximaldicken TMAX der Scheiben hat sich demgegenüber von 38,3 µm auf 58,6 µm vergrößert. Im zweiten Beispiel (die Ziel-Dickenkennwert-Funktion gibt ein konstantes (+3 σ)-Quantil der Maximaldicken TMAX der Scheiben vor) hat sich die Varianz der (+3 σ)-Quantile der Maximaldicken TMAX der Scheiben von 38,3 µm auf 0 µm verringert und demgegenüber die Varianz der zugehörigen (-3 σ)-Quantile der Minimaldicken TMIN von 5,2 µm auf 63,5 µm vergrößert.

Die vorstehende Beschreibung beispielhafter Ausführungsformen ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren. Daher sollen alle derartigen Abänderungen und Modifikationen sowie Äquivalente durch den Schutzbereich der Ansprüche abgedeckt sein.

## Patentansprüche

1. Verfahren zum gleichzeitigen Abtrennen einer Vielzahl von Scheiben von einem Werkstück mit einer Werkstückachse mittels einer Drahtsäge während eines Trennvorgangs, umfassend
das Bewegen eines Drahts der Drahtsäge relativ zum Werkstück durch Drehen von Drahtführungsrollen der Drahtsäge um ihre Achsen, wobei die Drahtführungsrollen einen Mantel aufweisen, der mit drahtführenden Rillen versehen ist, und ein Drahtgatter aus Drahtabschnitten des Drahts aufspannen; das Zustellen des Werkstücks senkrecht zu den Drahtabschnitten auf das Drahtgatter in Anwesenheit von Abrasivstoffen, wobei sich die Drahtabschnitte vollständig durch das Werkstück arbeiten, **dadurch gekennzeichnet, dass** eine nicht-lineare Abstands-Funktion dTAR(WP) in Abhängigkeit von einer Ziel-Dickenkennwert-Funktion TTAR(WP), einer Abstands-Funktion dINI(WP) und einer Dickenkennwert-Funktion TINI(WP) gewählt wird, wobei dTAR(WP) benachbarten Rillen im Mantel der Drahtführungsrollen an einer Position WP einen Abstand während des Trennvorgangs zuordnet, wobei TINI(WP) Scheiben, die während mehrerer vorangegangener Trennvorgänge mittels der Drahtsäge an der Position WP erhalten werden, einen an den Scheiben gemessenen Dickenkennwert zuordnet, wobei dINI(WP) benachbarten Rillen im Mantel der Drahtführungsrollen an der Position WP einen Abstand während der vorangegangenen Trennvorgänge zuordnet, wobei TTAR(WP) Scheiben, die während des Trennvorgangs an der Position WP abgetrennt werden, einen Ziel-Dickenkennwert zuordnet und wobei WP die axiale Position der benachbarten Rillen bezüglich der Achsen der Drahtführungsrollen bezeichnet.

2. Verfahren nach Anspruch 1, **dadurch gekennzeichnet, dass** eine Anzahl i vorangegangener Trennvorgänge durchgeführt wird und der Abstand dTAR(WP) derart gewählt wird, dass die Gleichung dTAR(WP) = dINI(WP) + TTAR(WP) - TINI(WP) erfüllt ist.

3. Verfahren nach Anspruch 1 oder Anspruch 2, **dadurch gekennzeichnet, dass** der gemessene Dickenkennwert der Mittelwert der Minimaldicke, der Mittelwert der Maximaldicke, der Mittelwert der mittleren Dicke oder die Dicke eines Quantils der Minimaldicke, der Maximaldicke oder der mittleren Dicke der gemessenen Scheiben ist.

4. Verfahren nach einem der Ansprüche 1 bis 3, wobei TTAR(WP) eine Konstante ist.

5. Verfahren nach einem der Ansprüche 1 bis 4, wobei der Draht ein glatter Pianodraht aus hypereutektischem Perlit ist und die Abrasivstoffe in Form einer Aufschlämmung (Slurry) aus Siliciumcarbid (SiC) in einer Trägerflüssigkeit aus Glycol oder Öl bereitgestellt werden.

6. Verfahren nach Anspruch 4, wobei der Draht zusätzlich mit einer Vielzahl von Einbuchtungen und Ausstülpungen senkrecht zur Längsrichtung des Drahts versehen ist.

7. Verfahren nach einem der Ansprüche 1 bis 6, wobei das Bewegen des Drahts in einer fortwährenden Abfolge von Paaren von Richtungsumkehrungen besteht und ein Paar aus Richtungsumkehrungen jeweils ein erstes Bewegen des Drahts in eine erste Richtung in Drahtlängsrichtung um eine erste Länge und ein nachfolgendes Bewegen des Drahts in eine zweite, der ersten Richtung genau entgegengesetzte Richtung um eine zweite Länge umfasst und wobei die erste Länge größer als die zweite Länge gewählt wird.

8. Verfahren nach einem der Ansprüche 1 bis 7, wobei die Werkstückachse parallel zu den Achsen der Drahtführungsrollen ausgerichtet ist.

9. Verfahren nach einem der Ansprüche 1 bis 8, wobei die Rillen eine Tiefe aufweisen, die einer Tiefen-Funktion t(WP) folgt, die den Rillen an der Position WP eine Tiefe proportional zur Einhüllenden des Drahts zuordnet.

10. Drahtsäge zum gleichzeitigen Abtrennen einer Vielzahl von Scheiben von einem Werkstück, umfassend Drahtführungsrollen, die ein Drahtgatter aufspannen und Achsen und Mäntel aufweisen, wobei die Mäntel mit einer Vielzahl von Rillen versehen sind, die Draht führen, wobei der Abstand zwischen benachbarten Rillen an einer Position WP einer nicht-linearen Abstands-Funktion dTAR(WP) folgt und wobei WP die axiale Position der benachbarten Rillen bezüglich der Achsen der Drahtführungsrollen bezeichnet.

11. Drahtsäge nach Anspruch 10, **dadurch gekennzeichnet, dass** dTAR(WP) so gewählt ist, dass die Gleichung dTAR(WP) = dINI(WP) + TTAR(WP) - TINI(WP) erfüllt ist, wobei TTAR(WP) eine Ziel-Dickenkennwert-Funktion ist, die an der Position WP abzutrennenden Scheiben einen angestrebten Dickenkennwert zuordnet, wobei TINI(WP) eine Dickenkennwert-Funktion ist, die Scheiben, die während mehrerer vorangegangener Trennvorgänge mittels der Drahtsäge an der Position WP erhalten wurden, einen an den Scheiben gemessenen Dickenkennwert zuordnet, wobei dINI(WP) eine Abstands-Funktion ist, die benachbarten Rillen im Mantel der Drahtführungsrollen an der Position WP einen Abstand zuordnet, der während der vorangegangenen Trennvorgänge bestand.

12. Drahtsäge nach Anspruch 10 oder Anspruch 11, **dadurch gekennzeichnet, dass** der gemessene Dickenkennwert der Mittelwert der Minimaldicke, der Mittelwert der Maximaldicke, der Mittelwert der mittleren Dicke oder die Dicke eines Quantils der Minimaldicke, der Maximaldicke oder der mittleren Dicke der gemessenen Scheiben ist.
